# EUROPEAN PATENT APPLICATION

(11) **EP 4 807 698 A2**
(43) Date of publication of application: **16.09.2026**
(21) Application number: 26192077.1
(22) Date of filing: 15.07.2026
(51) Int. Cl.: G06V 20/59, G06V 20/58

(54) **PARKING INTENTION RECOGNITION METHOD AND APPARATUS, ELECTRONIC DEVICE, AND STORAGE MEDIUM**

(30) Priority: 25.06.2026 SG 10202602186R
(71) Applicant: XG TECH PTE. LTD., Singapore 179098 (SG)
(72) Inventor: LIN, Wei, 179098 Singapore (SG); ZHANG, Ling, 179098 Singapore (SG); HUANG, Jingchang, 179098 Singapore (SG); ZHU, Hao, 179098 Singapore (SG)
(74) Representative: Casalonga

(57) **Abstract**

Disclosed are a parking intention recognition method and apparatus, an electronic device, and a storage medium, relating to the technical field of assisted driving. The method includes: acquiring multimodal information of a vehicle during driving; performing feature fusion on the multimodal information to obtain a multimodal fused feature; utilizing, based on the multimodal fused feature and a historical prediction result of a pre-trained neural network model, the neural network model to obtain a current prediction result including a parking probability and a target parking time; and recognizing a parking intention of the vehicle based on the parking probability and the target parking time of the vehicle.

## Description

### TECHNICAL FIELD

The present disclosure relates to the technical field of assisted driving, and in particular, to a parking intention recognition method and apparatus, an electronic device, and a storage medium.

### BACKGROUND

A remote vehicle finding function can help a user quickly find a parked vehicle based on a parking position recorded when the vehicle is parked into a space. To record the parking position when the vehicle is parked, in related technologies, the remote vehicle finding function is activated when the vehicle is in a reverse (R) gear, so that the user can quickly find the parked vehicle of the user based on key information.

However, there may also be other situations where the vehicle is in the R gear, such as reversing to yield on a narrow road section and temporary parking by a roadside. Therefore, determining that parking into a space is required merely based on a determination condition of the vehicle being in the R gear may cause the vehicle to falsely activate the remote vehicle finding function, resulting in a waste of vehicle resources.

### SUMMARY

To resolve the foregoing technical problem, the present disclosure provides a parking intention recognition method and apparatus, an electronic device, and a storage medium, so as to resolve a problem of false activation of a remote vehicle finding function caused by a single determination condition, thereby improving accuracy of parking intention recognition, and reducing unnecessary consumption of vehicle resources.

According to a first aspect of the present disclosure, there is provided a parking intention recognition method, including:
acquiring multimodal information of a vehicle during driving, where the multimodal information includes at least vehicle status information, scenario semantic information, and driving behavior information;
performing feature fusion on the multimodal information to obtain a multimodal fused feature;
utilizing, based on the multimodal fused feature and a historical prediction result of a pre-trained neural network model, the neural network model to obtain a current prediction result including a parking probability and a target parking time of the vehicle; and
recognizing a parking intention of the vehicle based on the parking probability and the target parking time of the vehicle, where the parking intention indicates whether the vehicle intends to park.

According to a second aspect of the present disclosure, there is provided a parking intention recognition apparatus, including:
an acquirement module, configured to acquire multimodal information of a vehicle during driving, where the multimodal information includes at least vehicle status information, scenario semantic information, and driving behavior information;
a feature fusion module, configured to perform feature fusion on the multimodal information to obtain a multimodal fused feature;
a prediction module, configured to utilize, based on the multimodal fused feature and a historical prediction result of a pre-trained neural network model, the neural network model to obtain a current prediction result including a parking probability and a target parking time of the vehicle; and
a recognition module, configured to recognize a parking intention of the vehicle based on the parking probability and the target parking time of the vehicle, where the parking intention indicates whether the vehicle intends to park.

According to a third aspect of the present disclosure, there is provided a computer program product wherein instructions in the computer program product, when executed by a processor, cause the processor to implement the parking intention recognition method provided in the embodiments of the first aspect of the present disclosure.

According to a fourth aspect of the present disclosure, there is provided an electronic device, including:
a processor; and
a memory for storing instructions executable by the processor, where
the processor is configured to read the executable instructions from the memory, and execute the instructions to implement the parking intention recognition method provided in the embodiments of the first aspect of the present disclosure.

According to a fifth aspect of the present disclosure, there is provided a computer-readable storage medium, on which a computer program is stored, where the computer program, when executed by a processor, causes the processor to implement the parking intention recognition method provided in the embodiments of the first aspect of the present disclosure.

According to the parking intention recognition method and apparatus, the electronic device, and the storage medium that are provided in the foregoing embodiments of the present disclosure, the multimodal information of the vehicle during driving is acquired, and feature fusion is performed on the multimodal information to obtain the multimodal fused feature, so as to improve sufficiency and accuracy of the information fusion. Further, the parking probability and the target parking time of the vehicle are predicted based on the multimodal fused feature and the historical prediction result of the neural network model, so as to recognize the parking intention of the vehicle. According to the embodiments of the present disclosure, the parking intention of the vehicle can be comprehensively analyzed from a plurality of dimensions such as a vehicle status, scenario semantics, and a driving behavior by fusing the multimodal information, which can effectively distinguish a real parking intention from non-parking behaviors such as brief deceleration and temporary yielding, thereby improving accuracy of determining the parking intention of the vehicle, significantly reducing a false trigger probability of the remote vehicle finding function, and improving utilization of vehicle resources.

### BRIEF DESCRIPTION OF THE DRAWINGS

FIG. 1 illustrates an architecture of an on-board system according to an exemplary embodiment of the present disclosure;
FIG. 2 is a flowchart of a parking intention recognition method according to an exemplary embodiment of the present disclosure;
FIG. 3 is a flowchart of step S201 according to an exemplary embodiment of the present disclosure;
FIG. 4 is a flowchart of step S2013 according to an exemplary embodiment of the present disclosure;
FIG. 5 is another flowchart of step S201 according to an exemplary embodiment of the present disclosure;
FIG. 6 is a flowchart of step S2014 according to an exemplary embodiment of the present disclosure;
FIG. 7 is a diagram of a fusion architecture of a multimodal fused feature according to an exemplary embodiment of the present disclosure;
FIG. 8 is a flowchart of step S2012 according to an exemplary embodiment of the present disclosure;
FIG. 9 is a flowchart of another embodiment of step S2014 according to an exemplary embodiment of the present disclosure;
FIG. 10 is a flowchart of step S204 according to an exemplary embodiment of the present disclosure;
FIG. 11 is another flowchart of step S204 according to an exemplary embodiment of the present disclosure;
FIG. 12 is still another flowchart of step S204 according to an exemplary embodiment of the present disclosure;
FIG. 13 is a flowchart after step S202 according to an exemplary embodiment of the present disclosure;
FIG. 14 is a diagram of a structure of a parking intention recognition apparatus according to an exemplary embodiment of the present disclosure; and
FIG. 15 is a diagram of a structure of an electronic device according to an embodiment of the present disclosure.

### DETAILED DESCRIPTION OF THE EMBODIMENTS

To explain the present disclosure, exemplary embodiments of the present disclosure will be described in detail below with reference to the accompanying drawings. Obviously, the described embodiments are merely some, not all, of the embodiments of the present disclosure. It should be understood that the present disclosure is not limited by the exemplary embodiments.

It should be noted that, unless otherwise specifically stated, the relative arrangement, numerical expressions, and numerical values of components and steps set forth in these embodiments do not limit the scope of the present disclosure.

### Application Overview

A remote vehicle finding function of a vehicle is an important component of an intelligent parking management system, and is intended to resolve a problem that it is difficult for users to quickly locate own vehicles in a large parking lot or in a complex parking environment. After the vehicle activates the remote vehicle finding function, a parking space information recognition algorithm may be started when the vehicle is about to park, to recognize parking space information of the vehicle, such as a parking position and a parking space number. For a large parking lot, such as a multi-story parking lot or a multi-zone parking lot, the parking space information may further include a number of a floor or a zone where the vehicle is located.

The vehicle may establish a communication connection with a mobile terminal of the user through an on-board system, so as to transmit the parking space information to the mobile terminal through the communication connection. For example, a designated application installed on the mobile terminal is bound to the on-board system of the vehicle, so that the vehicle can transmit the parking space information to the application when the parking space information is recognized, helping the user view the parking space information and locate a parking position of the vehicle in the parking lot through the parking space information, so as to quickly find the parked vehicle.

The vehicle may trigger the remote vehicle finding function by recognizing a parking intention. For example, the remote vehicle finding function is pre-activated when the on-board system recognizes that the vehicle has a parking intention, so that the parking space information can be recorded and saved timely when the vehicle is parked. Accurate recognition of the parking intention is a key prerequisite for efficient operation of the remote vehicle finding function, and directly affects timeliness and accuracy in acquiring the parking space information.

Currently, the recognition of the parking intention relies on a trigger state of a R gear of the vehicle, that is, the reverse gear. When recognizing that a gear lever of the vehicle is in the R gear, the on-board system recognizes that the vehicle has a parking intention, thereby activating the remote vehicle finding function. However, it is not that the R gear is triggered only in a parking scenario. In a non-parking scenario, such as temporary reversing by a roadside, adjusting a parking space, or reversing to yield on a narrow road section, the user needs to switch the gear lever to the R gear for temporary reversing, without a parking intention. Activating the remote vehicle finding function in the non-parking scenario not only wastes system resources of the vehicle, but also causes the system to falsely record the parking space information. This results in storage of invalid data, and may also interfere with subsequent normal vehicle finding operations of the user, degrading user experience.

Based on this, the on-board system may falsely recognize the trigger state of the R gear as a parking intention, resulting in reduced accuracy of parking intention recognition.

### Exemplary System

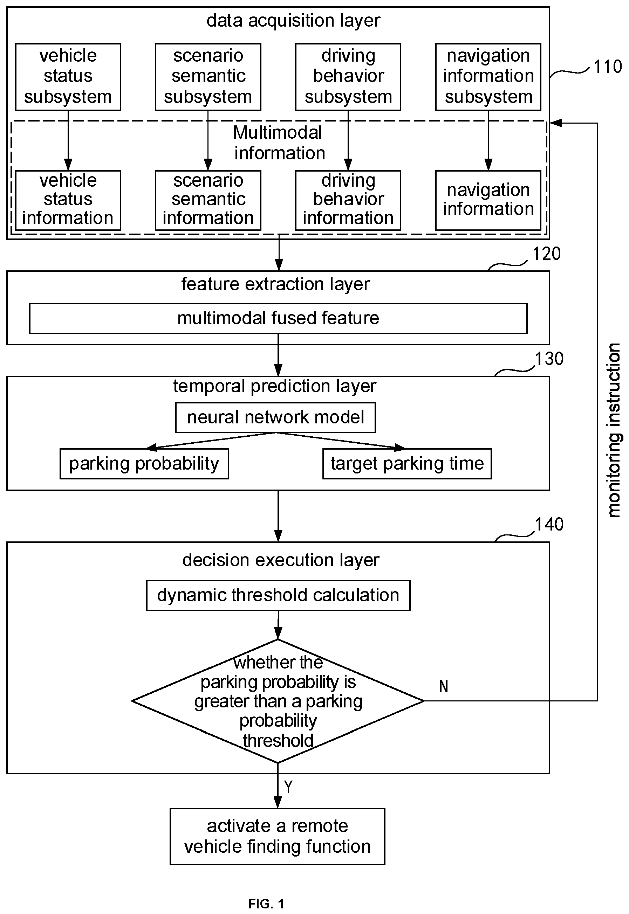

FIG. 1 illustrates an architecture of an on-board system according to an exemplary embodiment of the present disclosure. As shown in FIG. 1, an on-board system 100 in the present disclosure may include a data acquisition layer 110, a feature extraction layer 120, a temporal prediction layer 130, and a decision execution layer 140.

The data acquisition layer 110 is configured to acquire multimodal information of a vehicle during driving in real time. The data acquisition layer 110 may respectively establish communication connections with a vehicle status subsystem, a scenario semantic subsystem, and a driving behavior subsystem, to acquire different modal information through different subsystems, where the vehicle status subsystem is capable of acquiring vehicle status information, the scenario semantic subsystem is capable of acquiring scenario semantic information, and the driving behavior subsystem is capable of acquiring driving behavior information. Subsequently, the subsystems respectively upload the information respectively acquired thereby to the data acquisition layer 110 through the communication connections, so that the data acquisition layer 110 completes the acquisition of the multimodal information.

In some examples, the data acquisition layer 110 may further establish a communication connection with a navigation information subsystem, and acquire navigation information through the navigation information subsystem.

For example, the data acquisition layer 110 may execute various permutation and combination manners based on the vehicle status subsystem, the scenario semantic subsystem, the driving behavior subsystem, and the navigation information subsystem, to determine specific modality information included in the multimodal information. The permutation and combination of the various modality information is not specifically limited in the present disclosure.

For example, the data acquisition layer 110 may further include various sensing devices such as a vehicle speed sensor, a gear sensor, a steering wheel angle sensor, an acceleration sensor, a GPS positioning module, and an in-vehicle camera (which are not shown in FIG. 1). The vehicle speed sensor is configured to acquire a real-time driving speed of the vehicle. The gear sensor is configured to monitor a current position state of a gear lever. For an automatic transmission vehicle, the gear lever corresponds to an R gear, a D (Drive) gear, that is, the driving gear, a N (Neutral) gear, that is, the neutral gear, and a P (Park) gear, that is, the parking gear. For a manual transmission vehicle, the gear lever corresponds to numerically identified gears, such as 1st gear through 5th gear and an R gear. The steering wheel angle sensor is configured to record a rotation angle and a rotation rate of a steering wheel. The acceleration sensor is configured to sense changes in longitudinal acceleration and lateral acceleration of the vehicle. The GPS positioning module is configured to acquire real-time geographical position information of the vehicle. The in-vehicle camera may acquire facial images and gaze direction information of the driver. These multimodal information can reflect an operating state of the vehicle and an operational behavior of a driver from different dimensions, providing a comprehensive data basis for subsequent parking intention recognition.

The feature extraction layer 120 is connected to the data acquisition layer 110, and is configured to perform preprocessing and feature extraction on the acquired multimodal information. For different types of data, the feature extraction layer 120 adopts corresponding feature extraction methods to extract features from the different types of data, and performs feature fusion on these features to obtain a multimodal fused feature.

The temporal prediction layer 130 is connected to the feature extraction layer 120, and is configured to perform prediction and determination on a parking intention based on the multimodal fused feature extracted and merged by the feature extraction layer 120. This layer employs an LSTM (Long Short-Term Memory) network or a self-attention mechanism-based Transformer neural network model to analyze a multimodal fused feature of a vehicle behavior within a preset time window. For example, when the vehicle gradually decelerates from a normal driving state, rotation amplitude of the steering wheel increases, and the driver frequently gazes at a rearview mirror and a surrounding environment, the temporal prediction layer 130 can capture a combined pattern of these behavioral features, so as to determine whether the vehicle is looking for a parking space. Output of this layer is a parking probability and a target parking time, providing a more accurate decision basis for the decision execution layer 140.

The decision execution layer 140 is connected to the temporal prediction layer 130, and is configured to execute a corresponding control strategy based on an output result of the temporal prediction layer 130. The decision execution layer 140 is provided with a dynamic threshold determination mechanism. When the parking probability exceeds a parking probability value, the on-board system activates the remote vehicle finding function to record and save the parking space information. The threshold may be adaptively adjusted based on factors such as a parking lot type, a time period, and user historical behaviors. For example, during peak hours of a large shopping mall parking lot, a trigger threshold may be appropriately lowered to improve response sensitivity; while in scenarios such as a temporary stop at an expressway service area, the threshold may be increased to avoid false triggers.

For example, when the parking probability exceeds a parking probability value, the decision execution layer 140 may transmit a monitoring instruction to the data acquisition layer 110 to instruct the data acquisition layer 110 to continuously acquire the multimodal information.

### Exemplary Method

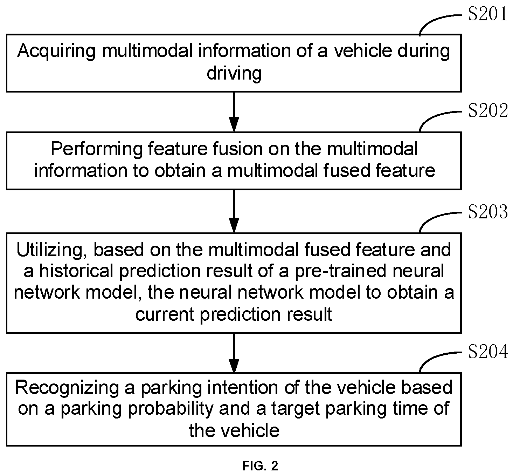

FIG. 2 is a flowchart of a parking intention recognition method according to an exemplary embodiment of the present disclosure. The present embodiment may be applied to a vehicle, an on-board electronic device, or an electronic device. The following embodiments are exemplarily described by using the on-board electronic device as an execution entity. As shown in FIG. 2, the method includes the following steps.

S201: Acquiring multimodal information of a vehicle during driving.

In some examples, the on-board electronic device may determine that the vehicle is in a driving state when a gear lever is in a D gear. In this case, a acquisition thread may be created by a data acquisition layer, and the acquisition thread may acquire the multimodal information of the vehicle during driving at a preset sampling frequency, such as 10 Hz.

The multimodal information may include vehicle status information, scenario semantic information, and driving behavior information. The vehicle status information indicates a driving state of the vehicle, such as accelerating, traveling at a constant speed, decelerating, or braking to stop. The scenario semantic information describes an external environmental feature of a position where the vehicle is located. The driving behavior information indicates operational habits and attention states of the driver.

S202: Performing feature fusion on the multimodal information to obtain a multimodal fused feature.

In some examples, the data acquisition layer transmits the acquired multimodal information to the feature extraction layer, which may perform preprocessing on different types of multimodal information by a parallel channel approach, so as to remove redundant information, noise, and outliers in the multimodal information, thereby improving quality of subsequent feature fusion.

Specifically, the feature extraction layer may include a vehicle status feature extraction channel, a scenario semantic feature extraction channel, and a driving behavior feature extraction channel. The channels respectively perform preprocessing on corresponding types of multimodal information, and after completing the preprocessing, respectively extract information features corresponding to each type of modal information, and merge the information features into multimodal features. The information features may be output in a form of feature vectors, to obtain a vehicle status feature vector, a scenario semantic feature vector, and a driving behavior feature vector, so as to facilitate subsequent multimodal feature fusion operations.

In some examples, the feature extraction layer may align the foregoing various types of information features according to a time dimension. For example, for multimodal information with a same sampling frequency, times for two adjacent data acquisitions for each type of modal information may be respectively marked as a time t1 and a time t2. In this way, during the process of aligning in the time dimension, information acquired at the time t1 for each type of modal information may be aligned. For example, vehicle status information, scenario semantic information, and driving behavior information at the time t1 may be aligned.

In another example, for multimodal information with different sampling frequencies, rounds of two adjacent data acquisitions for each type of modal information may be marked. For example, a first acquisition is marked as A, and during the process of aligning in the time dimension, information acquired in the round A for each type of modal information may be aligned. In this way, a problem of inconsistent sampling frequencies of different data sources can be resolved, and ultimately a unified time-granularity feature sequence is output for subsequent analysis by the temporal prediction layer.

After aligning in the time dimension, the feature extraction layer may perform feature fusion on the multimodal features. For example, the feature fusion may be concatenation fusion. Specifically, the feature extraction layer may concatenate the vehicle status feature vector, the scenario semantic feature vector, and the driving behavior feature vector along a feature dimension to form a higher-dimensional multimodal fused feature. For example, if the vehicle status feature vector is 4-dimensional, the scenario semantic feature vector is 4-dimensional, and the driving behavior feature vector is 4-dimensional, the concatenated multimodal fused feature vector is (4+4+4)×1=12×1. This concatenation fusion approach can preserve original feature details of the modal information, providing a rich information basis for subsequent parking intention recognition.

In some other examples, the feature fusion may also employ an attention mechanism fusion approach. The feature extraction layer may assign adaptive weights to different modal features, enabling a model to dynamically adjust importance of the modal information according to actual driving scenarios.

The foregoing concatenation fusion and attention mechanism fusion are merely two exemplary feature fusion approaches, and it should be understood that in the foregoing examples, the fusion approach for performing fusion on the multimodal information is not limited in the present disclosure.

In some examples, to ensure dimensional consistency of different modal features, standardization processing may be performed on the modal features before the feature fusion is performed. Reference may be made to a formula below: $x _ nom = \left(x-μ\right) / σ ;$

x_norm represents a standardized modal feature, x represents the modal feature on which the standardization processing is not yet performed µ represents a mean value statistically calculated from a training set, and σ represents a standard deviation statistically calculated from the training set. The training set is a data set for training the neural network model, and may include a plurality pieces of training data acquired from real parking scenarios, such as a shopping mall parking lot, a residential community, roadside parking, and other scenarios.

S203: Utilizing, based on the multimodal fused feature and a historical prediction result of a pre-trained neural network model, the neural network model to obtain a current prediction result.

In some examples, the feature extraction layer may transmit the multimodal fused feature to the temporal prediction layer. The temporal prediction layer includes the pre-trained neural network model, which can perform parking intention prediction on the multimodal fused feature to obtain the current prediction result. The current prediction result includes a parking probability and a target parking time of the vehicle. The parking probability represents a possibility that the vehicle performs a parking operation at the target parking time, with a value range of 0 to 1. The target parking time represents a predicted time point when the vehicle starts a parking operation, being a relative time value, with a unit of seconds, relative to a current time.

In some examples, the neural network model may be pre-trained through a specific training approach. The model may include an input layer, an LSTM layer, a first fully connected layer, and a second fully connected layer. The input layer is configured to receive the multimodal fused feature transmitted by the feature extraction layer, and the historical prediction result of the neural network model, so as to combine the historical prediction result as a prediction reference to improve accuracy of the current prediction result.

The LSTM layer includes a preset number of LSTM layers. For example, the LSTM layer includes two stacked LSTM layers, each with a plurality of hidden units for capturing a temporal dependency relationship in the multimodal fused feature. For example, numbers of hidden units of the two LSTM layers are both 128, which may also be adaptively adjusted according to computing power resources of a vehicle. For example, for the computing power resources of a small and medium-sized vehicle, the numbers of the hidden units may both be set to 64. The number of the hidden units of the LSTM is not specifically limited in the present disclosure.

In some examples, a forward propagation process of the LSTM is: $h \left(t\right) , c \left(t\right) = LSTM \left(x\left(t\right), h\left(t-1\right), c\left(t-1\right)\right) ;$

h(t) represents a hidden state at the current time, where the hidden state represents short-term memory information; c(t) represents a cell state at the current time, where the cell state represents long-term memory information; x(t) represents the multimodal fused feature; h(t-1) represents a hidden state at a previous time; and c(t-1) represents a cell state at the previous time. h(t-1) and c(t-1) may be obtained by parsing the historical prediction result.
$Forget gate : f \left(t\right) = σ \left(Wf\times \left[h\left(t-1\right), x\left(t\right)\right]+bf\right) ;$
where Wf represents a weight matrix of the forget gate, and bf represents a bias term of the forget gate.
$Input gate : i \left(t\right) = σ \left(Wi⋅\left[h\left(t-1\right), x\left(t\right)\right]+bi\right) ;$
where Wi represents a weight matrix of the input gate, and bi represents a bias term of the input gate.
$Output gate : o \left(t\right) = σ \left(Wo⋅\left[h\left(t-1\right), x\left(t\right)\right]+bo\right) ;$
where Wo represents a weight matrix of the output gate, and bo represents a bias term of the output gate.
$Cell state update : c \left(t\right) = f \left(t\right) ⊙ c \left(t-1\right) + i \left(t\right) ⊙ tanh \left(Wc⋅\left[h\left(t-1\right), x\left(t\right)\right]+bc\right) ;$
where Wc represents a weight matrix of the cell state update, and bc represents a bias term of the cell state update.
$Hidden state output : h \left(t\right) = o \left(t\right) ⊙ tanh \left(c\left(t\right)\right) .$

The first fully connected layer is configured to map a 128-dimensional hidden state output from one LSTM layer to the parking probability, with an output dimension of 1, to obtain the parking probability. For example, the parking probability may be output through a Sigmoid activation function, as expressed by a formula below: $P _ stop \left(t+Δf\right) = σ \left(W1⋅h\left(t\right)+b1\right) ;$

Δf is used to represent a time range for predicting the parking probability. For example, Δf = 10 seconds indicates predicting a probability of parking within next 10 seconds. W1 represents a weight matrix of the first fully connected layer, and b1 represents a bias term of the first fully connected layer.

The second fully connected layer is configured to map a 128-dimensional hidden state output from another LSTM layer to the target parking time, with an output dimension of 1, to obtain the target parking time. For example, the target parking time may be output through a Sigmoid activation function, as expressed by a formula below: $τ \left(t\right) = 60 ⋅ sigmoid \left(W2⋅h\left(t\right)+b2\right) ;$

W2 represents a weight matrix of the second fully connected layer, b2 represents a bias term of the second fully connected layer, and an output result is a number of seconds from the current time to a parking time, with a value range of 0 to 60 seconds.

In some examples, for mid-to-low-end vehicle models, considering differences in computing power resources, dual-layer LSTM may be simplified to single-layer LSTM, and the hidden state may be reduced from 128 dimensions to 64 dimensions, so as to adapt to the computing power resources of mid-to-low-end vehicle models.

S204: Recognizing a parking intention of the vehicle based on the parking probability and the target parking time of the vehicle.

In some examples, the decision execution layer may receive the current prediction result transmitted by the temporal prediction layer, and store the current prediction result in a recognition buffer of the on-board system. The recognition buffer is an area partitioned in a memory area of the on-board system for temporarily storing the current prediction result.

After the current prediction result is stored in the recognition buffer, the parking probability in the current prediction result is determined based on a preset parking probability threshold, to determine the parking intention of the vehicle, wherein the parking intention indicates whether the vehicle intends to park.

According to the method provided in this embodiment of the present disclosure, a real parking intention can be more accurately distinguished from a temporary reversing operation by comprehensively using multi-dimensional information and the neural network model, so as to effectively avoid false activation of the remote vehicle finding function caused by false trigger of the R gear, thereby saving system resources of the vehicle, reducing invalid data storage, and improving user experience. Meanwhile, according to the method, accuracy and real-time performance of parking intention recognition are further improved by introducing the historical prediction result as reference.

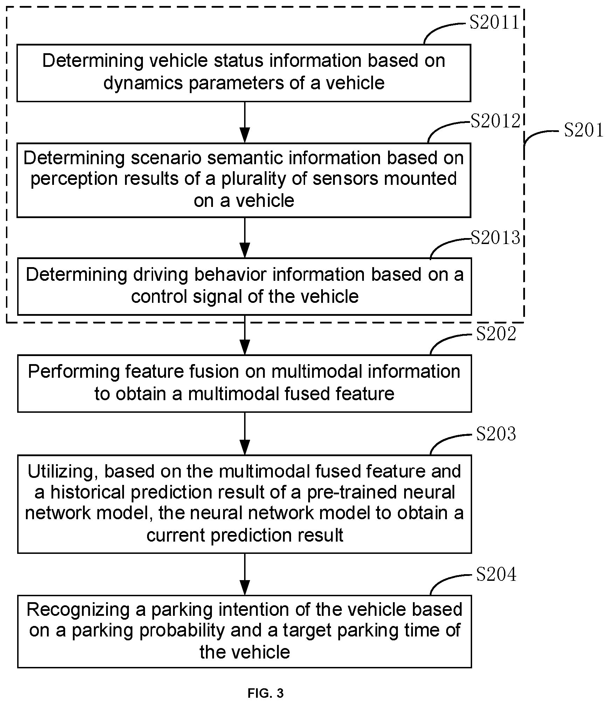

FIG. 3 is a flowchart of step S201 according to an exemplary embodiment of the present disclosure.

As shown in FIG. 3, on the basis of the foregoing embodiment shown in FIG. 2, step S201 includes the following steps.

S2011: Determining the vehicle status information based on vehicle dynamic parameters.

In some examples, the data acquisition layer may acquire the vehicle status information in real time by the vehicle status subsystem. Specifically, the vehicle status subsystem may be connected to a vehicle chassis control system in the on-board system, so as to read the vehicle dynamic parameters from the vehicle chassis control system in real time through a controller area network (CAN) bus, to acquire the vehicle status information.

For example, the vehicle status information may include a speed, an acceleration, a braking parameter, and/or a steering parameter of the vehicle.

The speed may represent an instantaneous operating state of the vehicle, and may be obtained from a speed signal output by a vehicle speed sensor within the vehicle dynamic parameters, in a unit of m/s.

The acceleration parameter can characterize a dynamic change trend of the vehicle, and may be obtained by reading a three-axis acceleration output by an inertial measurement unit (IMU) within the vehicle dynamic parameters. A longitudinal acceleration is the acceleration of the vehicle.

The braking parameter is used to determine a deceleration intention of the driver, and may be obtained by reading brake pedal opening fed back by a braking system within the vehicle dynamic parameters. The braking parameter may be normalized to an interval of [0, 1]. For example, 0 indicates no braking, and 1 indicates full braking.

The steering parameter can reflect a lateral control intention of the driver, and may be obtained by reading a steering wheel angle fed back by a steering system within the vehicle dynamic parameters, in a unit of radians, with a positive value indicating a left turn and a negative value indicating a right turn.

In some examples, the vehicle status information may be a state vector composed of the speed, the acceleration, the braking parameter, and the steering parameter of the vehicle. For example, the vehicle status information may be expressed by a formula below: $sv \left(t\right) = {\left[v\left(t\right), a\left(t\right), b\left(t\right), δ\left(t\right)\right]}^{⊤} ;$
sv(t) represents the state vector corresponding to the vehicle status information, v(t) represents the speed of the vehicle, a(t) represents the acceleration of the vehicle, b(t) represents the braking parameter of the vehicle, and δ(t) represents the steering parameter of the vehicle. Dimension of sv(t) is 4×1.

S2012: Determining the scenario semantic information based on perception results of a plurality of sensors mounted on the vehicle.

In some examples, the vehicle may be provided with a vehicle perception system including a plurality of sensors. The plurality of sensors may include a camera and a radar, or any other sensing device having an information acquisition capability.

The camera is configured to acquire external environment images of an area where the vehicle is located, and in-vehicle images. The vehicle may determine a number of cameras mounted on the vehicle based on types of the cameras. Taking cameras for acquiring external environment images as an example, there may be a plurality of cameras that shoot at fixed angles, so as to acquire external environment images at different angles of the vehicle. For a surround-view camera, a shooting angle may be adjusted by itself to implement 360-degree surround shooting, and there may be one camera.

The radar is configured to acquire point cloud data of an area where the vehicle is located, to perceive distance, speed, and azimuth information of obstacles around the vehicle. Optionally, the radar may be a laser radar, a millimeter-wave radar, or an ultrasonic radar.

The data acquisition layer may establish a communication connection with the vehicle perception system through the scenario semantic subsystem, and read the perception results acquired by the plurality of sensors through the vehicle perception system, to acquire the scenario semantic information.

For example, the scenario semantic information may include a distance from the vehicle to a target parking space, an included angle between a heading angle of the vehicle and a normal direction of the target parking space, a static obstacle ratio indicating a proportion of static obstacles around the vehicle, and/or a vacant parking space ratio. The target parking space is a parking space closest to the vehicle.

In some examples, the scenario semantic information may be a state vector composed of the distance from the vehicle to the target parking space, the included angle between the heading angle of the vehicle and the normal direction of the target parking space, the static obstacle ratio, and the vacant parking space ratio. For example, the scenario semantic information may be expressed by a formula below: $se \left(t\right) = {\left[d\left(t\right),θ\left(t\right),σ\left(t\right),p\left(t\right)\right]}^{T} ;$
se(t) represents a state vector corresponding to the scenario semantic information, d(t) represents the distance from the vehicle to the target parking space, θ(t) represents the included angle between the heading angle of the vehicle and the normal direction of the target parking space, σ(t) represents the static obstacle ratio, and p(t) represents the vacant parking space ratio. Dimension of se(t) is 4×1.

S2013: Determining the driving behavior information based on a control signal of the vehicle.

The data acquisition layer may monitor, in real time by the driving behavior subsystem, a control signal input by the driver through a human-machine interaction interface or a control signal input by the driver to a vehicle control device, and perform operation analysis on the control signal to determine the driving behavior information.

For example, the driving behavior information may include accelerator pedal position information, brake light status information, transmission gear position information, and/or turn signal information.

The accelerator pedal position information may reflect an acceleration intention of the driver, and may be obtained by reading a pedal opening percentage output by a accelerator pedal sensor in the vehicle control system, with a value range of [0, 1], where 0 indicates fully released and 1 indicates fully depressed.

The brake light status information indicates whether the vehicle is in a braking state, and may be obtained by reading a brake light control signal in the vehicle control system. The brake light status information may be represented by a binary value. For example, 1 indicates a brake light being on, that is, the vehicle is in a braking state; and 0 indicates the brake light being off.

The transmission gear position information can characterize a driving intention of the driver, and may be obtained by reading a current gear fed back by a transmission control unit in the vehicle control system, including but not limited to a park (P) gear, a reverse (R) gear, a neutral (N) gear, and a drive (D) gear.

The turn signal information indicates a turning intention of the driver, and may be obtained by reading a turn signal control signal in the vehicle control system. The turn signal information may be represented by a discrete value. For example, 0 indicates the turn signal being off, 1 indicates a left turn signal being on, 2 indicates a right turn signal being on, and 3 indicates the hazard warning lights being on.

In some examples, the driving behavior information may be a state vector composed of the accelerator pedal position information, the brake light status information, the transmission gear position information, and the turn signal information. For example, the driving behavior information may be expressed by a formula below: $sd \left(t\right) = {\left[u\left(t\right),l_brake\left(t\right),gear\left(t\right),l_turn\left(t\right)\right]}^{T} ;$
sd(t) represents the a vector corresponding to the driving behavior information, u(t) represents the accelerator pedal position information, l_brake(t) represents the brake light status information, gear(t) represents the transmission gear position information, and l_turn(t) represents the turn signal information. Dimension of sd(t) is 4×1.

It should be noted that steps S2011 to S2013 may be executed sequentially in a specific order, or may be executed in parallel. An execution order relationship among steps S2011 to S2013 is not limited in the present disclosure.

According to the method provided in the embodiments of the present disclosure, the vehicle status information such as the speed, the acceleration, the braking parameter, and/or the steering parameter is determined based on the vehicle dynamic parameters, the scenario semantic information related to the parking space is determined based on the perception results of the plurality of sensors such as the camera and the radar, and the driving behavior information is determined based on the control signal of the vehicle. This specific information acquisition approach can provide structured data input for parking intention determination from three core levels of vehicle control, environmental perception, and driver operation, so that subsequent feature fusion and parking prediction processes have a solid data basis, thereby further improving the accuracy and reliability of the parking intention recognition.

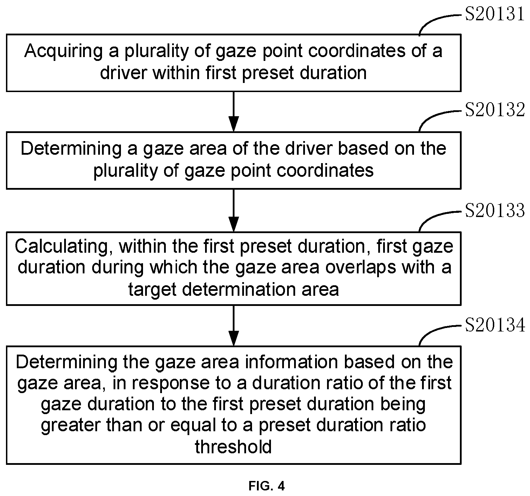

FIG. 4 is a flowchart of step S2013 according to an exemplary embodiment of the present disclosure.

In some examples, the driving behavior information further includes gaze area information. As shown in FIG. 4, on the basis of the foregoing embodiment shown in FIG. 3, step S2013 further includes the following steps.

S20131: Acquiring a plurality of gaze point coordinates of a driver within a first preset duration.

In some examples, the driving behavior subsystem may further include a driver monitoring camera configured to acquire facial images of the driver. The first preset duration is a continuous sampling time period preset according to a frame rate of the driver monitoring camera, and may be set to, for example, 3 seconds to 5 seconds. Within the first preset duration, the driver monitoring camera may acquire a plurality of facial images of the driver, and the driving behavior subsystem may recognize a plurality of gaze point coordinates of the driver from the plurality of facial images. For example, the plurality of gaze point coordinates may be determined by performing eye tracking on the facial images, and calculating gaze directions of the driver in three-dimensional space from multi-dimensional features such as a pupil center position and a head posture angle.

S20132: Determining a gaze area of the driver based on the plurality of gaze point coordinates.

After being determined, the plurality of gaze point coordinates may be mapped to a preset vehicle coordinate system according to a time series corresponding to the first preset duration, to form a gaze trajectory of the driver. Subsequently, the driving behavior subsystem may identify the gaze area of the driver based on the gaze trajectory.

For example, the gaze area may include a front road area, a left rearview mirror area, a right rearview mirror area, a dashboard area, a center console screen area, and other specific functional areas inside the vehicle. The driving behavior subsystem may determine a main gaze area of the driver by calculating distribution density and an aggregation degree of the plurality of gaze point coordinates in the vehicle coordinate system. For example, if the gaze point coordinates are predominantly distributed in an area in front of the vehicle within the first preset duration, it may be determined that the gaze area of the driver is the front road area; and if the gaze point coordinates frequently switch between the left rearview mirror area and the front road area, it may be determined that the driver is paying attention to a left-side traffic situation.

S20133: Calculating, within the first preset duration, a first gaze duration during which the gaze area overlaps with a target determination area.

The target determination area is a preset area related to parking. For example, when the vehicle is driving into a parking space, a reversing angle needs to be frequently adjusted. Therefore, the left and right rearview mirror areas may be set as the target determination area. When the driver frequently gazes at the target determination area, it may be determined that the driver is preparing for a parking operation.

In some examples, the target determination area may also be dynamically adjusted according to specific parking scenarios. For example, in a parallel parking scenario on a right side, the target determination area may focus on the right rearview mirror area and a rear area; and in a reverse parking scenario, the target determination area may be extended to a reversing camera display area and the left and right rearview mirror areas.

In some examples, the first gaze duration may be calculated based on a preset time window. For example, the preset time window is a sliding time window, with a window sliding step which may be set to a time period equal to or shorter than the first preset duration. Taking the window length being shorter than the first preset duration as an example, for example, the first gaze duration is 2 seconds to 4 seconds, and the window sliding step may be set to 0.5 seconds to 1 second. The driving behavior subsystem may count, within each sliding window, a number of frames where the gaze area overlaps with the target determination area, and calculate the first gaze duration.

S20134: Determining the gaze area information based on the gaze area, in response to a duration ratio of the first gaze duration to the first preset duration being greater than or equal to a preset duration ratio threshold.

For example, the first gaze duration is 3 seconds if a window length of the preset time window is 4 seconds, including 60 frames of images, among which gaze areas corresponding to 45 frames of images overlap with the target determination area. Based on this, the duration ratio of the first gaze duration to the first preset duration is 0.75.

If the preset duration ratio threshold is 0.6, 0.75 is greater than 0.6, and the driving behavior subsystem may determine the gaze area information of the driver. The gaze area information may include an identifier of the gaze area, the first gaze duration, the duration ratio, and a stability indicator of the gaze trajectory, so as to improve accuracy and reliability of the driving behavior information in combination with the gaze area information of the driver.

According to the method provided in the embodiments of the present disclosure, a visual attention focus of the driver is quantified by acquiring a gaze point of the driver and calculating a gaze duration ratio within the target determination area. When the driver gazes at the target determination area for a long time, it indicates that the driver is preparing for a parking operation, so that the parking intention of the driver is effectively recognized and feature dimension of the driving behavior information is improved, thereby enhancing the accuracy of subsequent parking intention prediction.

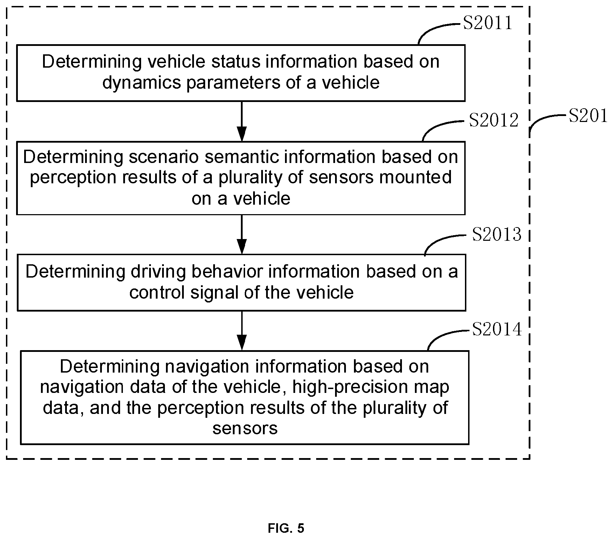

FIG. 5 is another flowchart of step S201 according to an exemplary embodiment of the present disclosure.

Referring to FIG. 5, on the basis of the foregoing embodiment shown in FIG. 3, the multimodal information further includes navigation information, and step S201 further includes the following step:

S2014: Determining the navigation information based on navigation data of the vehicle, high-precision map data, and the perception results of the plurality of sensors.

The navigation information includes a destination distance, a deviation angle between a current heading of the vehicle and a destination azimuth, a turning rate of the vehicle, a point-of-interest type corresponding to a destination, and a parking lot confidence corresponding to a vehicle position.

In some examples, the on-board system may further include a navigation information subsystem. The data acquisition layer may establish communication connections with an on-board navigation system and a high-precision map system through the navigation information subsystem, so as to acquire navigation data and high-precision map data of the vehicle. The high-precision map data can provide a user with map data such as road geometry information, traffic sign positions, parking facility distribution, and road gradient. The navigation data can accurately provide the user with the vehicle position.

In combination with the foregoing embodiments, to perform feature fusion on the multimodal features, the feature extraction layer may extract navigation features from the navigation information, and concatenate the vehicle status feature vector, the scenario semantic feature vector, the driving behavior feature vector, and the navigation information along a feature dimension to obtain the multimodal fused feature. The process of performing preprocessing and vector conversion on the navigation information may refer to the foregoing step S202, and details are not described herein.

In some examples, the navigation information may be a state vector composed of the destination distance, the deviation angle between the current heading of the vehicle and the destination azimuth, the turning rate of the vehicle, the point-of-interest type corresponding to the destination, and the parking lot confidence corresponding to the vehicle position. For example, the navigation information may be expressed by a formula below: $sn \left(t\right) = {\left[d_goal\left(t\right), θ_goal\left(t\right), r_turn\left(t\right), s_poi\left(t\right), c_parking\left(t\right)\right]}^{T} ;$
sn(t) represents a state vector corresponding to the navigation information, d_goal(t) represents the destination distance, θ_goal(t) represents the deviation angle between the current heading of the vehicle and the destination azimuth, r_turn(t) represents the turning rate of the vehicle, s_poi(t) represents the point-of-interest type corresponding to the destination, and c_parking(t) represents the parking lot confidence corresponding to the vehicle position. If s_poi(t) is a multi-dimensional embedding vector, such as 8-dimensional, the dimension of sn(t) is 12×1.

It should be noted that FIG. 5 merely illustrates one exemplary execution order of the present application. In actual applications, steps S2011 to S2014 may also be executed sequentially in other execution orders, or may be executed in parallel. An execution order relationship between step S2014 and steps S2011 to S2013 is not limited in the present disclosure.

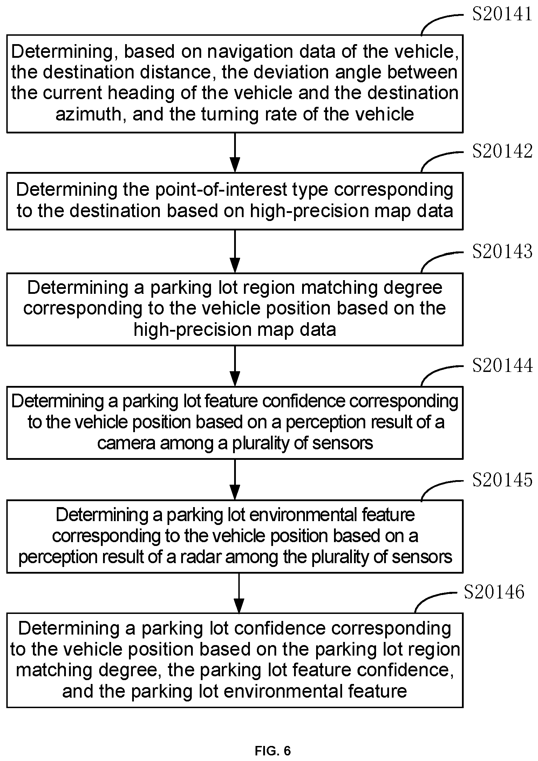

FIG. 6 is a flowchart of step S2014 according to an exemplary embodiment of the present disclosure.

Referring to FIG. 6, on the basis of the foregoing embodiment shown in FIG. 5, step S2014 may include the following steps.

S20141: Determining, based on the navigation data of the vehicle, the destination distance, the deviation angle between the current heading of the vehicle and the destination azimuth, and the turning rate of the vehicle.

When the user inputs a destination in the on-board system, the navigation information subsystem combines the high-precision map data and a current position of the vehicle to plan a driving route for the vehicle and calculate the destination distance based on the driving route. For example, the destination distance may include a straight-line distance and a route distance, where the straight-line distance is the distance between the current position of the vehicle and the destination, and the route distance is the distance of the vehicle from the current position to the destination along the driving route.

Based on the driving route, the navigation information subsystem may acquire the current heading of the vehicle and the destination azimuth. The current heading is a driving direction of the vehicle at a current time, and the destination azimuth is a bearing angle pointing to the destination from the current position of the vehicle. The deviation angle between the current heading of the vehicle and the destination azimuth can be obtained by calculating a difference between the current heading and the destination azimuth. This deviation angle reflects the degree of deviation between an actual driving direction of the vehicle and a direction toward the destination. When the deviation angle is relatively small, it indicates that the vehicle is generally driving toward the destination. When the deviation angle is relatively large, it indicates that the vehicle may be detouring or deviating from an optimal route.

The turning rate of the vehicle characterizes a speed of change of a vehicle direction, and may be obtained by a steering wheel angle sensor or an inertial measurement unit. A higher turning rate usually indicates that the vehicle is performing a turning operation. The navigation information subsystem may combine the driving route to determine whether the turning behavior is normal road driving or a turning behavior that may indicate a parking intention.

S20142: Determining the point-of-interest type corresponding to the destination based on the high-precision map data.

The point-of-interest type corresponding to the destination characterizes a place category to which the destination belongs. For example, the point-of-interest type may include categories such as catering establishments, shopping malls, medical institutions, tourist attractions, residential communities, office buildings, and transportation hubs. After receiving the destination input by the user, the navigation information subsystem may search for a destination position in the high-precision map data and extract the point-of-interest type of the destination.

In some examples, the high-precision map system may store classification labels, and the navigation information subsystem may search for a corresponding classification label in the high-precision map system based on a name of the destination, to determine the point-of-interest type of the destination.

S20143: Determining a parking lot region matching degree corresponding to the vehicle position based on the high-precision map data.

The parking lot region matching degree is used to quantify a degree of association between the current position of the vehicle and a surrounding parking lot region.

In some examples, the navigation information subsystem may determine a position of the vehicle position in the high-precision map data based on a GPS coordinate of the vehicle in the navigation data, and then perform spatial matching between the vehicle position and a parking lot region marked in the high-precision map data, so as to determine a distance from the vehicle position to a parking lot entrance and whether the vehicle is located within a contour range of the parking lot region.

The parking lot region matching degree may be normalized to an interval of 0-1. When the vehicle position is within the contour range of the parking lot region, the navigation information subsystem may output the parking lot region matching degree as 1. When the vehicle position is not within the contour range of the parking lot region, the navigation information subsystem may quantitatively calculate the parking lot region matching degree based on the distance from the vehicle position to the parking lot entrance. For example, a greater distance from the vehicle position to the parking lot entrance indicates a smaller parking lot region matching degree. The navigation information subsystem may set an extreme determination distance for the parking lot region matching degree. When the distance from the vehicle position to the parking lot entrance is greater than the extreme determination distance, the navigation information subsystem may output the parking lot region matching degree as 0.

S20144: Determining a parking lot feature confidence corresponding to the vehicle position based on the perception result of the camera among the plurality of sensors.

The parking lot feature confidence is used to characterize credibility that an environment where the vehicle is currently located has parking lot features. The scenario semantic subsystem may extract multi-dimensional features from images acquired by the camera through a scenario classification network algorithm, to identify whether the images contain typical parking lot elements such as a parking lot entrance sign, a parking fee sign, a ground parking line, a parking space number, a speed bump, and a barrier gate.

When a plurality of parking lot elements are identified with high clarity, the scenario semantic subsystem may output higher parking lot feature confidence. When only a few vague features are identified or no obvious parking lot elements are found, lower confidence is output.

S20145: Determining a parking lot environmental feature corresponding to the vehicle position based on the perception result of the radar among the plurality of sensors.

The parking lot environmental feature is used to characterize parking lot layout features contained in environmental features around the vehicle. The parking lot layout features may include high-density stationary vehicles, a narrow space (relative to a driving road), and low-speed vehicle motion features. The scenario semantic subsystem may analyze a spatial distribution feature of obstacles around the vehicle based on the point cloud data acquired by the radar, compare the spatial distribution feature with a preset parking lot layout feature, and generate the parking lot environmental feature based on a comparison result.

S20146: Determining the parking lot confidence corresponding to the vehicle position based on the parking lot region matching degree, the parking lot feature confidence, and the parking lot environmental feature.

In some examples, the scenario semantic subsystem may respectively assign different weight values to the parking lot region matching degree, the parking lot feature confidence, and the parking lot environmental feature, and calculate a weighted sum result of the parking lot region matching degree, the parking lot feature confidence, and the parking lot environmental feature by using a multi-source fusion method, to obtain the parking lot confidence. For example, the calculation approach for the parking lot confidence may be expressed by a formula below: $c _ parking \left(t\right) = w 1 ⋅ c _ map \left(t\right) + w 2 ⋅ c _ vision \left(t\right) + w 3 ⋅ c _ radar \left(t\right) ;$
c_parking(t) represents the parking lot confidence, c_map(t) represents the parking lot region matching degree, c_vision(t) represents the parking lot feature confidence, c_radar(t) represents the parking lot environmental feature, w1 representsa first weight, w2 represents a second weight, and w3 represents a third weight,. It is satisfied that w1 + w2 + w3 = 1.

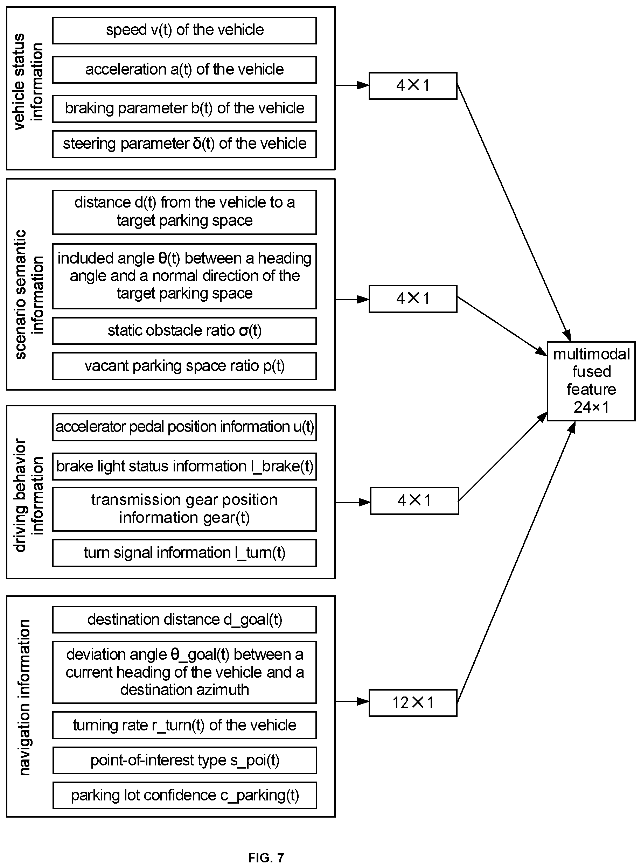

FIG. 7 is a diagram of a fusion architecture of a multimodal fused feature according to an exemplary embodiment of the present disclosure.

Referring to FIG. 7, in some examples, after feature fusion is performed on the multimodal information in combination with the navigation information, total dimension of the multimodal fused feature is 24, where feature dimension of the vehicle status information is 4×1, feature dimension of the scenario semantic information is 4×1, feature dimension of the driving behavior information is 4×1, and feature dimension of the navigation information is 12×1.

According to the method provided in the embodiments of the present disclosure, the navigation information is introduced into the multimodal information, enabling synergistic effect of the navigation features with three types of features of vehicle status, scenario semantics, and driving behavior, thereby improving the feature dimension of the multimodal fused feature, and improving the accuracy of the subsequent parking intention recognition.

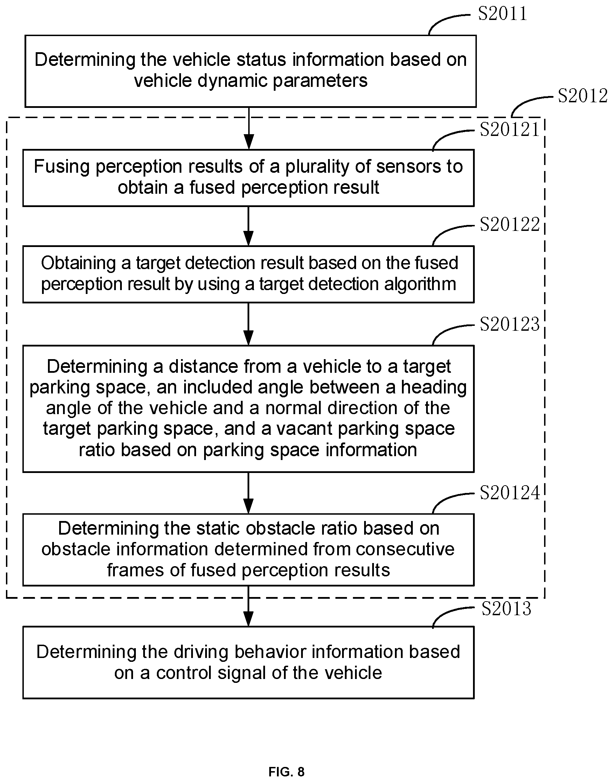

FIG. 8 is a flowchart of step S2012 according to an exemplary embodiment of the present disclosure.

Referring to FIG. 8, on the basis of the foregoing embodiment shown in FIG. 3, step S2012 includes the following steps.

S20121: Fusing the perception results of the plurality of sensors to obtain a fused perception result.

After the perception results are acquired by the plurality of sensors, the vehicle perception system may sort and fuse the perception results acquired by the plurality of sensors to obtain the fused perception result, and transmit the fused perception result to the scenario semantic subsystem.

In some examples, the vehicle perception system may activate the camera through a parking space detection module. Taking the surround-view camera as an example, the parking space detection module may acquire surround-view images around the vehicle through the surround-view camera, that is, a perception result of the camera.

In some examples, the vehicle perception system may activate the radar through an obstacle detection module, and scan obstacles around the vehicle through the radar to obtain obstacle sensor data, that is, a perception result of the radar.

It should be noted that exemplary description is made in the foregoing examples merely by using the camera and the radar. In actual perception processes, other sensors such as a light sensor, a temperature sensor, a humidity sensor, and an inertial measurement unit may also be used to obtain more comprehensive perception results. This is not specifically limited in the embodiments of the present disclosure.

S20122: Obtaining a target detection result based on the fused perception result by using a target detection algorithm.

The scenario semantic subsystem may detect the fused perception result through a deep learning-based target detection algorithm, to obtain the target detection result. The target detection result may include parking space information and obstacle information regarding a parking space and an obstacle around the vehicle.

In some examples, the scenario semantic subsystem identifies the target parking space in the surround-view images of the fused perception result, and records a parking space marking of the target parking space, a parking space number, a position coordinate of the target parking space, a normal direction of the target parking space, and a parking space occupancy state, to obtain the parking space information. The scenario semantic subsystem identifies dynamic or static obstacles in the obstacle sensor data of the fused perception result, and calculates a static indicator of each obstacle to obtain the obstacle information.

For example, the target detection algorithm may employ the deep learning-based target detection algorithm, such as a YOLO (You Only Look Once) algorithm, a Faster R-CNN algorithm, or any other single-stage or two-stage detection network capable of simultaneously implementing target classification and localization.

S20123: Determining, based on the parking space information, the distance from the vehicle to the target parking space, the included angle between the heading angle of the vehicle and the normal direction of the target parking space, and the vacant parking space ratio.

In some examples, the scenario semantic subsystem may calculate a Euclidean distance between a center of the vehicle and a center point coordinate of the target parking space to obtain the distance from the vehicle to the target parking space. The scenario semantic subsystem may identify the normal direction of the target parking space based on the surround-view images, and calculate the included angle between the heading angle of the vehicle and the normal direction of the target parking space. The scenario semantic subsystem may calculate the vacant parking space ratio based on the parking space occupancy state by determining whether there is a vehicle target within the parking space area.

It should be noted that the parking space occupancy state refers to whether all detected parking spaces in the fused perception result are occupied by other vehicles, so as to calculate the vacant parking space ratio of these parking spaces.

S20124: Determining the static obstacle ratio based on the obstacle information determined from consecutive frames of fused perception results.

In some examples, to accurately identify the dynamic or static obstacles, the scenario semantic subsystem may acquire consecutive frames of obstacle information, for example, 10 consecutive frames of obstacle information.

Obstacles whose positions remain unchanged in the consecutive frames of obstacle information are determined as static obstacles, and obstacles whose positions change are determined as dynamic obstacles. The scenario semantic subsystem obtains the static obstacle ratio by statistically calculating a ratio of a number of static obstacles to the total number of obstacles. The static obstacle ratio can represent complexity of a current parking environment. When the static obstacle ratio is higher, it indicates that the parking environment is relatively fixed, and a degree of restriction on a drivable space of the vehicle is greater.

According to the method provided in the embodiments of the present disclosure, the fused perception result is obtained by fusing the perception results of the plurality of sensors, and the target detection result including the parking space information and the obstacle information is obtained by using the target detection algorithm, and then quantified parameters such as specific distance, included angle, vacant parking space ratio, and static obstacle ratio are calculated. This method improves accuracy and robustness of environmental perception through multi-sensor information fusion, and reduces perception errors, so that a calculated scenario semantic feature is more accurate and stable.

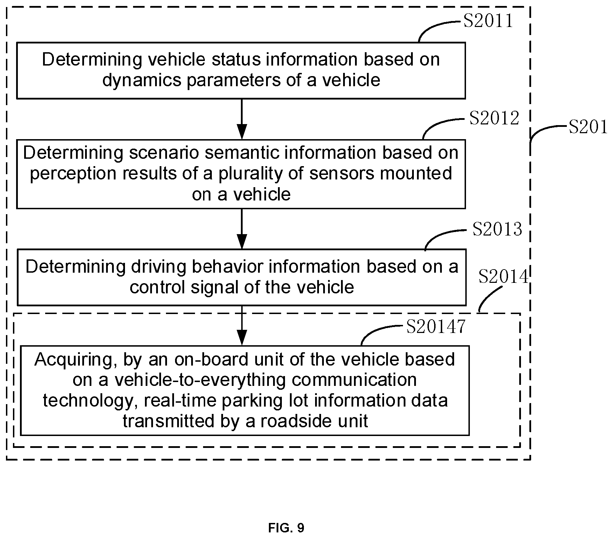

FIG. 9 is a flowchart of another embodiment of step S2014 according to an exemplary embodiment of the present disclosure.

Referring to FIG. 9, on the basis of the foregoing embodiment shown in FIG. 5, the navigation information may further include real-time parking lot information, and step S2014 may further include:

S20147: Acquiring, by an on-board unit of the vehicle based on a vehicle-to-everything communication technology, real-time parking lot information data transmitted by a roadside unit.

When the on-board system is connected to a network, the navigation information subsystem may communicate with the roadside unit by the on-board unit of the vehicle based on the vehicle-to-everything (V2X) communication technology. The roadside unit is a communication infrastructure disposed along a road or inside a parking lot, and can acquire and broadcast the real-time parking lot information data in real time. The real-time parking lot information data includes real-time parking space information, a number of vacant parking spaces, and parking lot traffic information. Specifically, the real-time parking space information includes occupancy states of all parking spaces, parking space types, and precise position coordinates of the parking spaces within the parking lot. The number of vacant parking spaces reflects a total amount of vacant resources currently available for parking. The parking lot traffic information represents a number of vehicles entering and leaving the parking lot per unit time, vehicle density distribution in each area, and prediction data during peak hours. The navigation information subsystem may calculate a recommended parking space position based on the real-time parking space information, and generate an optimal parking route plan in combination with the current position, the driving direction, and destination information of the vehicle.

The navigation information subsystem adds the recommended parking space position, the number of vacant parking spaces, and the parking lot traffic information to the navigation information, as shown in a formula below: $sn \left(t\right) = {\left[d_goal\left(t\right), θ_goal\left(t\right), r_turn\left(t\right), s_poi\left(t\right), c_parking\left(t\right), n_free\left(t\right), c_congestion\left(t\right), log_recommend\left(t\right)\right]}^{T} ;$

n_free(t) represents the number of vacant parking spaces, c_congestion(t) represents the parking lot traffic information, and loc_recommend(t) represents the recommended parking space position.

According to the method provided in the embodiments of the present disclosure, by introducing the vehicle-to-everything communication technology, the vehicle is enabled to acquire the real-time parking lot information data such as the number of vacant parking spaces and a traffic condition, so as to provide more real-time and accurate environmental support for parking intention recognition, thereby avoiding misjudgment caused by delayed parking lot information. Meanwhile, the real-time parking space information can also provide the driver with a precise parking guidance route within the parking lot, thereby further improving user experience.

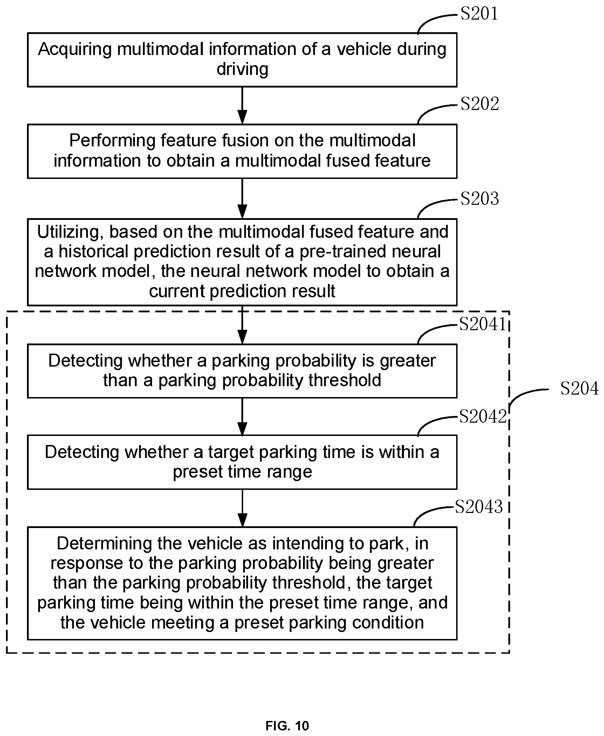

FIG. 10 is a flowchart of step S204 according to an exemplary embodiment of the present disclosure.

On the basis of the foregoing embodiment shown in FIG. 2, step S204 may include the following steps.

S2041: Detecting whether the parking probability is greater than a parking probability threshold.

When the parking probability is greater than or equal to the parking probability threshold, it is determined that the vehicle has a parking intention. In this case, the decision execution layer may transmit a trigger signal to the on-board system to secondarily verify the target parking time.

When the parking probability is less than the parking probability threshold, regardless of whether the target parking time is within a preset time range, it may be determined that the vehicle has no parking intention. In this case, the recognition buffer may be cleared, and steps S201 to S204 may be re-executed to continuously perform parking intention recognition.

In some examples, the parking probability threshold is a preset value. For example, the parking probability threshold may be 0.5. Optionally, the preset value may also be other values. A numerical value of the preset value is not specifically limited in this embodiment.

S2042: Detecting whether the target parking time is within a preset time range.

After receiving the trigger signal, the on-board system may detect, through the decision execution layer, whether the target parking time is within the preset time range. when the target parking time is within the preset time range, it indicates that the current time conforms to a regular parking habit of the user, and it is determined that confidence of the parking intention is high.

When the target parking time is not within the preset time range, it indicates that a current parking behavior deviates from a historical habit pattern of the user, and there may be temporary parking or an abnormal trip. In this case, the confidence of the parking intention is low. The decision execution layer transmits a warning instruction to the on-board system, to activate only a basic parking guidance function while not activating the remote vehicle finding function.

S2043: Determining the vehicle as intending to park, in response to the parking probability being greater than the parking probability threshold, the target parking time being within the preset time range, and the vehicle meeting a preset parking condition.

When the parking probability is greater than the parking probability threshold and the target parking time is within the preset time range, the on-board system may verify a parking condition of the vehicle. The preset parking condition includes that the vehicle speed is not greater than a vehicle speed threshold, a number of vacant parking spaces in the parking lot within a preset time is not zero, and the destination distance is not greater than a distance threshold.

If the vehicle meets one or more preset parking conditions, the on-board system may activate the remote vehicle finding function of the vehicle, and record and save the parking space information by an optical character recognition (OCR) model.

According to the method provided in the embodiments of the present disclosure, the parking intention is determined based on a plurality of different conditions, thereby further improving the accuracy of parking intention recognition. The detection of the parking probability threshold and the time range can ensure the reliability of parking intention recognition. The preset parking condition combines real-time environmental information such as the vehicle speed, the number of vacant parking spaces, and the destination distance, thereby avoiding misjudgment in cases of not meeting an actual parking condition, and avoiding resource wastes and false recording.

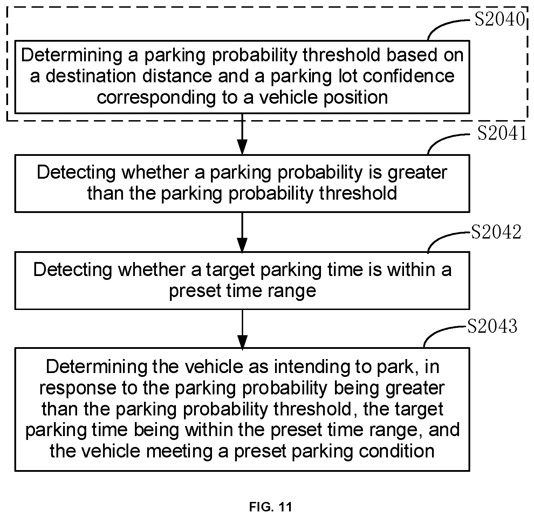

FIG. 11 is another flowchart of step S204 according to an exemplary embodiment of the present disclosure.

As shown in FIG. 11, on the basis of the foregoing embodiment shown in FIG. 10, before step S2041, the method may further include the following step:

S2040: Determining the parking probability threshold based on the destination distance and the parking lot confidence corresponding to the vehicle position.

In some examples, the decision execution layer may dynamically adjust the parking probability threshold based on the destination distance and the parking lot confidence corresponding to the vehicle position. For example, a farther destination distance indicates that the parking probability threshold may be raised by the decision execution layer, to avoid prematurely triggering a parking preparation process. A closer destination distance indicates that the parking probability threshold may be lowered by the decision execution layer, to ensure recognition accuracy when approaching the destination.

The parking lot confidence corresponding to the vehicle position has a negative correlation with the parking probability threshold. For example, if the parking lot confidence is higher, it indicates that a possibility that an area where the vehicle is currently located is a parking lot is greater, and the decision execution layer may lower the parking probability threshold. Conversely, if the parking lot confidence is lower, the parking probability threshold is raised to avoid false triggers on an ordinary road or in a temporary parking area.

In some examples, the on-board system may define a function of the parking probability threshold, as shown in a formula below: $T _ alarm = T _ base - k 1 ⋅ c _ parking \left(t\right) - k 2 ⋅ exp \left(-d_goal\left(t\right)/d0\right) ;$

T_alarm represents the parking probability threshold, T_base represents a baseline threshold, k1 represents a weight coefficient of the parking lot confidence, k2 represents a weight coefficient of the destination distance, and d0 represents a distance decay constant.

Optionally, it is satisfied that T_base = 0.7, k1 = 0.3, k2 = 0.2, and d0 = 20 meters. In this embodiment of the present disclosure, the foregoing parameters may be adaptively adjusted according to actual driving conditions and map information. Numerical values of T_base, k1, k2, and d0 are not specifically limited in the present disclosure.

For example, when the vehicle is in a parking lot region and arrives at the destination, a lower parking probability threshold may be calculated according to the foregoing formula, so as to trigger parking at any time. When the vehicle is in a non-parking lot region and the destination distance is greater than 100 meters, a higher parking probability threshold may be calculated according to the foregoing formula, to avoid false recognition of the parking intention of the vehicle.

According to the method provided by the embodiments in the present disclosure, by dynamically adjusting the parking probability threshold, the parking intention recognition is enabled to adapt to requirements of different scenarios. When the destination distance is far or the parking lot confidence is low, appropriately increasing the parking probability threshold can avoid false triggers. In a case of approaching the destination or when the parking lot confidence is high, lowering the threshold can improve response sensitivity, thereby further improving applicability and user experience of the system under different scenarios.

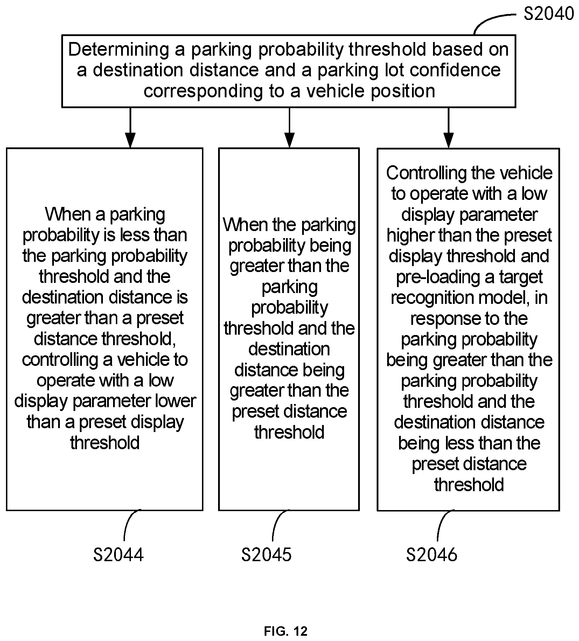

FIG. 12 is still another flowchart of step S204 according to an exemplary embodiment of the present disclosure.

On the basis of the foregoing embodiment shown in FIG. 11, after step S2040, the method further includes the following steps.

S2044: Controlling the vehicle to operate with a low display parameter lower than a preset display threshold, in response to the parking probability being less than the parking probability threshold and the destination distance being greater than a preset distance threshold.

In some examples, the decision execution layer may adaptively adjust an operating mode of the on-board system based on the parking probability. When the parking probability is less than the parking probability threshold and the destination distance is greater than the preset distance threshold, it indicates that the vehicle is currently far from the destination and a possibility of triggering parking is low. In this case, the decision execution layer may control the on-board system to operate in a low-power mode.

In the low-power mode, the on-board system reduces display parameters and operates with a low display parameter lower than the preset display threshold, for example, reduces brightness of a center console screen, reduce a navigation information update frequency, and suspends non-essential background application processes, thereby reducing system power consumption and reducing continuous high-load operation of a hardware device.

S2045: Controlling the vehicle to operate with a high display parameter higher than the preset display threshold, in response to the parking probability being greater than the parking probability threshold and the destination distance being greater than the preset distance threshold.

In some examples, when the parking probability is greater than the parking probability threshold and the destination distance is greater than the preset distance threshold, it indicates that the vehicle may have a need for temporary parking, such as a mid-trip rest or refueling. In this case, the decision execution layer may control the on-board system to operate in a medium-power mode, thereby ensuring that the on-board system is in a higher response state.

In the medium-power mode, the on-board system increases the display parameters and operates with a high display parameter higher than the preset display threshold, thereby ensuring that road conditions, POI (Point of Interest) information, and parking-related data can be clearly displayed on the center console screen.

S2046: Controlling the vehicle to operate with a low display parameter higher than the preset display threshold and pre-loading a target recognition model, in response to the parking probability being greater than the parking probability threshold and the destination distance being less than the preset distance threshold.

In some examples, when the parking probability is greater than the parking probability threshold and the destination distance is less than the preset distance threshold, it indicates that the vehicle is about to arrive at the destination and a possibility of triggering parking is high. In this case, the decision execution layer may control the on-board system to operate in a high-power mode, and pre-load the target recognition model. For example, the target recognition model is an optical character recognition model, so that the remote vehicle finding function can be activated at any time, and parking the space number in the parking lot can be recognized by the optical character recognition model, thereby reducing activation delays.

According to the method provided in the embodiments of the present disclosure, allocation of system resources is optimized by dynamically adjusting the display parameter of the vehicle based on the parking probability and the destination distance and through the pre-loading of the target recognition model. Reducing the display parameter in a low-probability scenario can save energy consumption; increasing the display parameter in a medium-probability scenario improves user experience; and increasing the display parameter while pre-loading the target recognition model in a high-probability scenario shortens an activation delay of the remote vehicle finding function, thereby improving resource utilization efficiency and intelligence of the on-board system in responding to the parking intention.

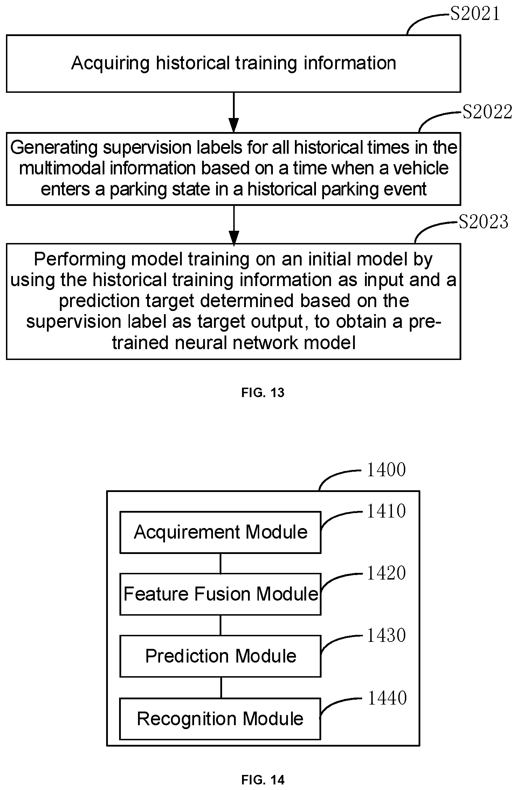

FIG. 13 is a flowchart after step S202 according to an exemplary embodiment of the present disclosure.

Referring to FIG. 13, on the basis of the foregoing embodiment shown in FIG. 2, after step S202, the method further includes the following steps.

S2021: Acquiring historical training information.

The historical training information is used to train the neural network model in step S202, so that the neural network model is capable of outputting a prediction result of the parking intention based on the multimodal fused feature.

For example, the historical training information includes historical multimodal information within a preset duration prior to occurrence of a historical parking event. Corresponding to the multimodal information acquired in step S201, the historical multimodal information includes at least one or more of historical vehicle status information, historical scenario semantic information, historical driving behavior information, and historical navigation information.

S2022: Generating supervision labels for respective historical times in the multimodal information based on a time when the vehicle enters a parking state in the historical parking event.

A time T_stop when the vehicle enters the parking state is a time when the vehicle is shifted into the P gear or the speed is consistently zero, and supervision labels are generated for respective historical times in the multimodal information based on this time.

The supervision labels include a classification label for indicating whether a parking event is about to occur, and/or a time label for indicating remaining time until a time when the parking event occurs. For example, taking the historical time as z for exemplary description, the classification label may be expressed as a formula below: $y _ stop \left(t\right) = 1 if 0 < T _ stop - z \leq Δf , else 0 ;$

y_stop(t) represents the classification label at the historical time z.

For example, the time label may be expressed as a formula below: $y _ time \left(t\right) = T _ stop - t if T _ stop - t > 0 , else 0 ;$

S2023: Performing model training on an initial model by using the historical training information as input and a prediction target determined based on the supervision label as a target output, to obtain the pre-trained neural network model.

After generating the supervision labels, the on-board system may input the historical training information as training data into the neural network model to be trained, and iteratively optimize a network parameter of the neural network model by using the supervision labels as target output. During the training process, the neural network model learns a mapping relationship between the multimodal fused feature and the parking intention. After a preset number of rounds of training iterations, the on-board system may acquire the prediction target output by the neural network model on a validation set. The prediction target includes an occurrence probability of the parking event and/or a predicted parking time.

Optionally, the preset number of rounds may be 50, or may be dynamically increased or decreased according to a training effect of the neural network model. A numerical value of the preset number of rounds is not specifically limited in the present disclosure .

When the prediction target meets a preset convergence condition, the pre-trained neural network model is obtained, and the model may be deployed in the on-board system for real-time parking intention recognition.

In some examples, a loss function of the neural network model may be expressed as a formula below: $L = α ⋅ BCE \left(P_stop, y_stop\right) + β ⋅ MSE \left(τ,y_time\right) ;$

It is satisfied that α = 1.0, and β = 0.1, and P_stop represents the prediction target.

According to the method provided in the embodiments of the present disclosure, the neural network model is trained through the multimodal information of the historical parking event, so that the neural network model can learn the mapping relationship between the multimodal fused feature and the parking intention. The setting of the supervision labels, including the classification label and the time label, clarifies the prediction target of the model so that the neural network model can simultaneously output the parking probability and the predicted parking time, and can effectively recognize parking intentions in different driving scenarios, thereby improving accuracy and robustness of the neural network model in practical applications.

### Exemplary Apparatus

FIG. 14 is a diagram of a structure of a parking intention recognition apparatus according to an exemplary embodiment of the present disclosure.

Referring to FIG. 14, a parking intention recognition apparatus 1400 includes an acquirement module 1410, a feature fusion module 1420, a prediction module 1430, and a recognition module 1440.

The parking intention recognition apparatus 1400 may be configured to implement the corresponding method embodiments of the present disclosure.

In some examples, the acquirement module 1410 is configured to acquire multimodal information of a vehicle during driving, where the multimodal information includes at least vehicle status information, scenario semantic information, and driving behavior information. The feature fusion module 1420 is configured to perform feature fusion on the multimodal information to obtain a multimodal fused feature. The prediction module 1430 is configured to utilize, based on the multimodal fused feature and a historical prediction result of a pre-trained neural network model, the neural network model to obtain a current prediction result. The recognition module 1440 is configured to recognize the parking intention of the vehicle based on a parking probability and a target parking time of the vehicle, where the parking intention indicates whether the vehicle intends to park.

In some examples, the acquirement module 1410 is configured to determine the vehicle status information based on vehicle dynamic parameters, where the vehicle status information includes a speed, an acceleration, a braking parameter, and/or a steering parameter of the vehicle; determine the scenario semantic information based on perception results of a plurality of sensors mounted on the vehicle, where the plurality of sensors include at least a camera and a radar, the scenario semantic information includes a distance from the vehicle to a target parking space, an included angle between a heading angle of the vehicle and a normal direction of the target parking space, and a static obstacle ratio and/or a vacant parking space ratio around the vehicle, the target parking space being a parking space closest to the vehicle; and determine the driving behavior information based on a control signal of the vehicle, where the driving behavior information includes accelerator pedal position information, brake light status information, transmission gear position information, and/or turn signal information.

In some examples, the acquirement module 1410 is further configured to acquire a plurality of gaze point coordinates of a driver within first preset duration; determine a gaze area of the driver based on the plurality of gaze point coordinates; calculate, within the first preset duration, first gaze duration during which the gaze area overlaps with a target determination area, where the target determination area is a pre-set region related to parking; and in response to a duration ratio of the first gaze duration to the first preset duration being greater than or equal to ratio threshold, determine the gaze area information based on the gaze area.

In some examples, the acquirement module 1410 is further configured to determine the navigation information based on navigation data of the vehicle, high-precision map data, and the perception results of the plurality of sensors, where the navigation information includes a destination distance, a deviation angle between a current heading of the vehicle and a destination azimuth, a turning rate of the vehicle, a point-of-interest type corresponding to a destination, and a parking lot confidence corresponding to a vehicle position.

In some examples, the acquirement module 1410 is configured to fuse the perception results of the plurality of sensors to obtain a fused perception result; obtain a target detection result based on the fused perception result by using a target detection algorithm, where the target detection result includes at least parking space information and obstacle information regarding a parking space and an obstacle around the vehicle; determine, based on the parking space information, the distance from the vehicle to the target parking space, the included angle between the heading angle of the vehicle and the normal direction of the target parking space, and the vacant parking space ratio; and determine the static obstacle ratio based on the obstacle information determined from a plurality consecutive frames of fused perception results.

In some examples, the acquirement module 1410 is configured to determine the destination distance, the deviation angle between the current heading of the vehicle and the destination azimuth, and the turning rate of the vehicle based on the navigation data of the vehicle; determine the point-of-interest type corresponding to the destination based on the high-precision map data; determine a parking lot region matching degree corresponding to the vehicle position based on the high-precision map data; determine a parking lot feature confidence corresponding to the vehicle position based on the perception result of the camera among the plurality of sensors; determine a parking lot environmental feature corresponding to the vehicle position based on the perception result of the radar among the plurality of sensors; and determine the parking lot confidence corresponding to the vehicle position based on the parking lot region matching degree, the parking lot feature confidence, and the parking lot environmental feature.

In some examples, the acquirement module 1410 is further configured to acquire, by an on-board unit of the vehicle based on a vehicle-to-everything communication technology, real-time parking lot information data transmitted by a roadside unit, where the roadside unit is disposed in a parking lot, and the real-time parking lot information include real-time parking space information, a number of vacant parking spaces, and parking lot traffic information.

In some examples, the recognition module 1440 is configured to detect whether the parking probability is greater than a parking probability threshold; detect whether the target parking time is within a preset time range; and determine the vehicle as intending to park, in response to the parking probability being greater than the parking probability threshold, the target parking time being within the preset time range, and the vehicle meeting a preset parking condition, where the preset parking condition includes at least one of: a vehicle speed being not greater than a vehicle speed threshold, a number of vacant parking spaces in the parking lot within a preset time being not zero, and the destination distance being not greater than a distance threshold.

In some examples, the recognition module 1440 is configured to determine the parking probability threshold based on the destination distance and the parking lot confidence corresponding to the vehicle position.

In some examples, the recognition module 1440 is further configured to: control the vehicle to operate with a low display parameter lower than a preset display threshold, in response to the parking probability being less than the parking probability threshold and the destination distance being greater than a preset distance threshold; control the vehicle to operate with a high display parameter higher than the preset display threshold controlling the vehicle to operate with a high display parameter higher than the preset display threshold, in response to the parking probability being greater than the parking probability threshold and the destination distance being greater than the preset distance threshold; and control the vehicle to operate with a low display parameter higher than the preset display threshold and pre-load a target recognition model, in response to the parking probability being greater than the parking probability threshold and the destination distance being less than the preset distance threshold, where the target recognition model is used for recognizing parking space numbers in the parking lot.

In some examples, the parking intention recognition apparatus 1400 further includes a training module, configured to: acquire historical training information, where the historical training information includes historical multimodal information within preset duration prior to occurrence of a historical parking event, the historical multimodal information including at least one of: historical vehicle status information, historical scenario semantic information, historical driving behavior information, and historical navigation information; generate supervision labels for all historical times in the multimodal information based on a time when the vehicle enters a parking state in the historical parking event, where the supervision labels include a classification label for indicating whether a parking event is about to occur, and/or a time label for indicating remaining time to a time when the parking event occurs; and perform model training on an initial model by using the historical training information as input and a prediction target determined based on the supervision label as target output, to obtain the pre-trained neural network model, where the prediction target includes an occurrence probability of the parking event and/or a predicted parking time.

For beneficial technical effects corresponding to the exemplary apparatus embodiments, refer to the corresponding beneficial technical effects in the exemplary method section described above, and details are not described herein.

### Exemplary Electronic Device

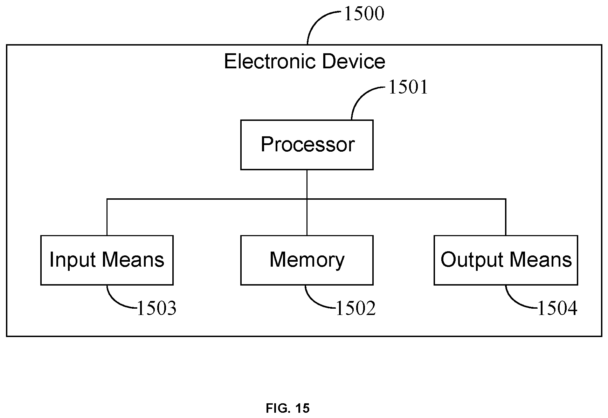

FIG. 15 is a diagram of a structure of an electronic device according to an embodiment of the present disclosure.

As shown in FIG. 15, an electronic device 1500 includes at least one processor 1501 and a memory 1502.

The processor 1501 may be a central processing unit (CPU) or another form of processing unit having a data processing capability and/or an instruction execution capability, and may control other components in the electronic device 1500 to perform desired functions.

The memory 1502 may include one or more computer program products, which may include various forms of computer-readable storage media, such as a volatile memory and/or a non-volatile memory. The volatile memory may include, for example, a random access memory (RAM) and/or a cache. The non-volatile memory may include, for example, a read-only memory (ROM), a hard disk, and a flash memory. One or more computer program instructions may be stored on the computer-readable storage medium, and the processor 1501 may run the one or more computer program instructions to implement the parking intention recognition method in the various embodiments of the present disclosure described above and/or other desired functions.

In one example, the electronic device 1500 may further include an input means 1503 and an output means 1504 . These components are interconnected through a bus system and/or other forms of connection mechanisms (not shown).

The input means 1503 may further include, for example, a keyboard and a mouse.

The output means 1504 may output various information to the outside, and may include, for example, a display, a speaker, a printer, a communication network, and a remote output means connected to the communication network.

Certainly, for simplicity, only some of the components of the electronic device 1500 that are related to the present disclosure are shown in FIG. 15, and components such as a bus and an input/output interface are omitted. In addition, according to specific applications, the electronic device 1500 may further include any other suitable components.

### Exemplary Computer Program Product and Computer-Readable Storage Medium

In addition to the foregoing method and device, embodiments of the present disclosure may further provide a computer program product including computer program instructions that, when executed by a processor, cause the processor to execute the steps in the parking intention recognition method in the various embodiments of the present disclosure described in the foregoing "Exemplary Method" section.

The computer program product may be program code, written with one or any combination of a plurality of programming languages, that is configured for performing the operations in the embodiments of the present disclosure. The programming languages include an object-oriented programming language, such as Java or C++, and also include a conventional procedural programming language, such as a "C" language or a similar programming language. The program code may be entirely or partially executed on a user computing device, executed as a stand-alone software package, partly executed on a user computing device and partly executed on a remote computing device, or entirely executed on the remote computing device or a server.

In addition, the embodiments of the present disclosure may further relate to a computer-readable storage medium, on which computer program instructions are stored. The computer program instructions, when executed by a processor, cause the processor to perform the steps in the parking intention recognition method in the various embodiments of the present disclosure described in the foregoing "Exemplary Method" section.

The computer-readable storage medium may be one readable medium or any combination of a plurality of readable media. The readable medium may be a readable signal medium or a readable storage medium. The readable storage medium includes, for example but is not limited to, electrical, magnetic, optical, electromagnetic, infrared, or semiconductor systems, apparatuses, or devices, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

Basic principles of the present disclosure are described above in combination with specific embodiments. However, the advantages, superiorities, and effects mentioned in the present disclosure are merely examples rather than limitations, and it should not be considered that these advantages, superiorities, and effects are necessary for the embodiments of the present disclosure. In addition, the specific details disclosed above are merely for examples and for ease of understanding, rather than for limitations. The details described above do not limit the present disclosure to necessarily employing the foregoing specific details for implementation.

A person skilled in the art may make various modifications and variations to the present disclosure without departing from the spirit and the scope of the present application. Thus, if these modifications and variations of the present application fall within the scope of the claims and equivalent technologies of the claims of the present disclosure, the present disclosure also intends to include these modifications and variations.

## Claims

1. A parking intention recognition method, comprising:
acquiring (S201) multimodal information of a vehicle during driving, wherein the multimodal information includes at least vehicle status information, scenario semantic information, and driving behavior information;
performing (S202) feature fusion on the multimodal information to obtain a multimodal fused feature;
utilizing (S203), based on the multimodal fused feature and a historical prediction result of a pre-trained neural network model, the neural network model to obtain a current prediction result including a parking probability and a target parking time of the vehicle; and
recognizing (S204) a parking intention of the vehicle based on the parking probability and the target parking time of the vehicle, where the parking intention indicates whether the vehicle intends to park.

2. The method according to claim 1, wherein the acquiring (S201) multimodal information of a vehicle during driving comprises:
determining (S2011) the vehicle status information based on vehicle dynamic parameters, wherein the vehicle status information includes a speed, an acceleration, a braking parameter, and/or a steering parameter of the vehicle;
determining (S2012) the scenario semantic information based on perception results of a plurality of sensors mounted on the vehicle, wherein the plurality of sensors include at least a camera and a radar, the scenario semantic information includes a distance from the vehicle to a target parking space, an included angle between a heading angle of the vehicle and a normal direction of the target parking space, a static obstacle ratio indicating a proportion of static obstacles around the vehicle, and/or a vacant parking space ratio, the target parking space being a parking space closest to the vehicle; and
determining (S2013) the driving behavior information based on a control signal of the vehicle, wherein the driving behavior information includes accelerator pedal position information, brake light status information, transmission gear position information, and/or turn signal information.

3. The method according to claim 2, wherein the driving behavior information further includes gaze area information, and the acquiring (S201) multimodal information of a vehicle during driving further comprises:
acquiring (S20131) a plurality of gaze point coordinates of a driver within a first preset duration;
determining (S20132) a gaze area of the driver based on the plurality of gaze point coordinates;
calculating (S20133), within the first preset duration, a first gaze duration during which the gaze area overlaps with a target determination area, wherein the target determination area is a pre-set region related to parking; and
determining (S20134) the gaze area information based on the gaze area, in response to a duration ratio of the first gaze duration to the first preset duration being greater than or equal to a preset duration ratio threshold.

4. The method according to claim 2, wherein the multimodal information further includes navigation information, and the acquiring (S201) multimodal information of a vehicle during driving further comprises:
determining (S2014) the navigation information based on navigation data of the vehicle, high-precision map data, and the perception results of the plurality of sensors, wherein the navigation information includes a destination distance, a deviation angle between a current heading of the vehicle and a destination azimuth, a turning rate of the vehicle, a point-of-interest type corresponding to a destination, and a parking lot confidence corresponding to a vehicle position.

5. The method according to claim 3 or 4, wherein the determining (S2012) the scenario semantic information based on perception results of a plurality of sensors mounted on the vehicle comprises:
fusing (S20121) the perception results of the plurality of sensors to obtain a fused perception result;
obtaining (S20122) a target detection result based on the fused perception result by using a target detection algorithm, wherein the target detection result includes at least parking space information and obstacle information regarding a parking space and an obstacle around the vehicle;
determining (S20123), based on the parking space information, the distance from the vehicle to the target parking space, the included angle between the heading angle of the vehicle and the normal direction of the target parking space, and the vacant parking space ratio; and
determining (S20124) the static obstacle ratio based on the obstacle information determined from consecutive frames of fused perception results.

6. The method according to claim 4, wherein the determining (S2014) the navigation information based on navigation data of the vehicle, high-precision map data, and the perception results of the plurality of sensors comprises:
determining (S20141), based on the navigation data of the vehicle, the destination distance, the deviation angle between the current heading of the vehicle and the destination azimuth, and the turning rate of the vehicle;
determining (S20142) the point-of-interest type corresponding to the destination based on the high-precision map data;
determining (S20143) a parking lot region matching degree corresponding to the vehicle position based on the high-precision map data;
determining (S20144) a parking lot feature confidence corresponding to the vehicle position based on the perception result of the camera among the plurality of sensors;
determining (S20145) a parking lot environmental feature corresponding to the vehicle position based on the perception result of the radar among the plurality of sensors; and
determining (S20146) the parking lot confidence corresponding to the vehicle position based on the parking lot region matching degree, the parking lot feature confidence, and the parking lot environmental feature.

7. The method according to claim 4, wherein the navigation information further includes real-time parking lot information, and the acquiring (S201) multimodal information of a vehicle during driving further comprises:
acquiring (S20147), by an on-board unit of the vehicle based on a vehicle-to-everything communication technology, real-time parking lot information data transmitted by a roadside unit , wherein the roadside unit is disposed in a parking lot, and the real-time parking lot information includes real-time parking space information, a number of vacant parking spaces, and parking lot traffic information.

8. The method according to claim 4, wherein the recognizing (S204) a parking intention of the vehicle based on the parking probability and the target parking time of the vehicle comprises:
detecting (S2041) whether the parking probability is greater than a parking probability threshold;
detecting (S2042) whether the target parking time is within a preset time range; and
determining (S2043) the vehicle as intending to park, in response to the parking probability being greater than the parking probability threshold, the target parking time being within the preset time range, and the vehicle meeting a preset parking condition, wherein the preset parking condition includes at least one of:
a vehicle speed being not greater than a vehicle speed threshold, a number of vacant parking spaces in the parking lot within a preset time being not zero, and the destination distance being not greater than a distance threshold.

9. The method according to claim 8, wherein:
the parking probability threshold is a preset value; or
before the detecting (S2041) whether the parking probability is greater than a parking probability threshold, the method further comprises:
determining (S2040) the parking probability threshold based on the destination distance and the parking lot confidence corresponding to the vehicle position.

10. The method according to claim 9, wherein after the determining (S2040) the parking probability threshold based on the destination distance and the parking lot confidence corresponding to the vehicle position, the method further comprises:
controlling (S2044) the vehicle to operate with a low display parameter lower than a preset display threshold, in response to the parking probability being less than the parking probability threshold and the destination distance being greater than a preset distance threshold;
controlling (S2045) the vehicle to operate with a high display parameter higher than the preset display threshold, in response to the parking probability being greater than the parking probability threshold and the destination distance being greater than the preset distance threshold; and
controlling (S2046) the vehicle to operate with a low display parameter higher than the preset display threshold and pre-loading a target recognition model, in response to the parking probability being greater than the parking probability threshold and the destination distance being less than the preset distance threshold, wherein the target recognition model is used for recognizing parking space numbers in the parking lot.

11. The method according to claim 1, further comprising:
acquiring (S2021) historical training information, wherein the historical training information includes historical multimodal information within a preset duration prior to occurrence of a historical parking event, the historical multimodal information including at least one of: historical vehicle status information, historical scenario semantic information, historical driving behavior information, and historical navigation information;
generating (S2022) supervision labels for respective historical times in the multimodal information based on a time when the vehicle enters a parking state in the historical parking event, wherein the supervision labels includes a classification label for indicating whether a parking event is about to occur, and/or a time label for indicating a remaining time until a time when the parking event occurs; and
performing (S2023) model training on an initial model by using the historical training information as input and a prediction target determined based on the supervision label as a target output, to obtain the pre-trained neural network model, wherein the prediction target includes an occurrence probability of the parking event and/or a predicted parking time.

12. A parking intention recognition apparatus (1400), comprising:
an acquirement module (1410), configured to acquire multimodal information of a vehicle during driving, wherein the multimodal information includes at least vehicle status information, scenario semantic information, and driving behavior information;
a feature fusion module (1420), configured to perform feature fusion on the multimodal information to obtain a multimodal fused feature;
a prediction module (1430), configured to utilize, based on the multimodal fused feature and a historical prediction result of a pre-trained neural network model, the neural network model to obtain a current prediction result including a parking probability and a target parking time of the vehicle; and
a recognition module (1440), configured to recognize a parking intention of the vehicle based on the parking probability and the target parking time of the vehicle, wherein the parking intention indicates whether the vehicle intends to park.

13. The parking intention recognition apparatus (1400) according to claim 12, wherein the acquirement module (1410) is configured to acquire the multimodal information of the vehicle during driving by:
determining the vehicle status information based on vehicle dynamic parameters, wherein the vehicle status information includes a speed, an acceleration, a braking parameter, and/or a steering parameter of the vehicle;
determining the scenario semantic information based on perception results of a plurality of sensors mounted on the vehicle, wherein the plurality of sensors include at least a camera and a radar, the scenario semantic information includes a distance from the vehicle to a target parking space, an included angle between a heading angle of the vehicle and a normal direction of the target parking space, a static obstacle ratio indicating a proportion of static obstacles around the vehicle, and/or a vacant parking space ratio, the target parking space being a parking space closest to the vehicle; and
determining the driving behavior information based on a control signal of the vehicle, wherein the driving behavior information includes accelerator pedal position information, brake light status information, transmission gear position information, and/or turn signal information.

14. A non-transitory computer-readable storage medium, on which a computer program is stored, wherein the computer program, when executed by a processor (1501), causes the processor (1501) to implement the parking intention recognition method according to any one of claims 1 to 11.

15. An electronic device (1500), comprising:
a processor (1501); and
a memory (1502) for storing instructions executable by the processor (1501), wherein
the processor (1501) is configured to read the executable instructions from the memory (1502), and execute the instructions to implement the parking intention recognition method according to any one of claims 1 to 11.
